# EUROPÄISCHE PATENTSCHRIFT

(11) **EP 1 199 016 B1**
(45) Veröffentlichungstag und Bekanntmachung des Hinweises auf die Patenterteilung: **13.07.2005**
(21) Anmeldenummer: 01124810.1
(22) Anmeldetag: 17.10.2001
(51) Int. Cl.: A47J 31/44

(54) **Kaffeemaschine**
Coffee machine
Machine à café

(30) Priorität: 18.10.2000 DE 20017859 U
(43) Veröffentlichungstag der Anmeldung: 24.04.2002
(73) Patentinhaber: WMF WÜRTTEMBERGISCHE METALLWARENFABRIK AG, 73309 Geislingen/Steige (DE)
(72) Erfinder: Göltenboth, Frank, 89081 Ulm (DE); Kiefer, Alexander, 73329 Kuchen (DE)
(74) Vertreter: Grünecker, Kinkeldey, Stockmair & Schwanhäusser Anwaltssozietät

(56) Entgegenhaltungen:
- EP-A- 0 737 434
- DE-C- 19 921 483
- DE-U- 7 120 645
- DE-U- 8 615 604
- DE-U- 29 810 291
- US-A- 6 082 246

## Beschreibung

Die Erfindung bezieht sich auf eine Kaffeemaschine mit wenigstens einem höhenverstellbaren Auslauf.

Aus der DE-U-298 10 291 ist ein Getränkespender, insbesondere eine Kaffee- oder Espressomaschine mit einem höhenverstellbaren Auslauf bekannt. Der höhenverstellbare Auslauf zum Befüllen eines Serviergefäßes ist an einem Auslaufteil befestigt, das in einer Gleitführung höhenverstellbar an einer stationären Vorderwand der Maschine angeordnet ist. Das Auslaufteil ist mit einem Griff versehen, durch den die Verstellung bewirkt werden kann. Das Auslaufteil ist entweder als Behälter ausgebildet, der über einen festen, aus der Vorderwand der Maschine in das Auslaufteil hineinragenden Auslauf befüllt wird und über den oder die höhenverstellbaren Ausläufe entleert wird, oder ist nur als Träger und als Abdeckung für einen nachgeführten Auslaufschlauch ausgebildet. Bei dieser Konstruktion muss die Vorderwand über die volle Verstellhöhe frei von anderen Einrichtungen bleiben, was die Höhenverstellung begrenzt.

Die US-A-6 082 246 beschreibt eine Kaffee- und Teemaschine derjenigen Art, die eine untere Standfläche, einen senkrechten Träger und einen sich über die Standfläche erstreckenden Ausleger enthält, wobei das zu befüllende Gefäß auf die Standfläche unterhalb des Auslegers gestellt wird. Der Ausleger ist mit Bedienelementen und einem Filterträger versehen, aus dem das Getränk nach unten herausläuft. Das Gehäuse des Trägers besteht aus zwei teleskopisch ineinanderschiebbare Gehäuseteile, wobei das untere Gehäuseteil fest mit der Standfläche und das obere Gehäuseteil fest mit dem Ausleger verbunden ist. Zum Höhenverstellen des Filterträgers wird das obere Teil des Gehäuseträgers relativ zum unteren Teil verschoben. Im Gebrauch wird sich somit die Gesamthöhe der Kaffeemaschine um den Weg der Höhenverstellung vergrößern, was zu Problemen mit den die Kaffeemaschine umgebenden Einbauten sowie gegebenenfalls zu einer Verschiebung des Schwerpunktes (Kopflastigkeit) führen kann, so dass auch hier das Ausmaß der Höhenverstellung begrenzt ist.

Kaffeemaschinen sind in großer Zahl auf dem Markt und werden in der Gastronomie, in Kantinen und dergleichen eingesetzt. Um den vielfältigen Verbraucherwünschen im Hinblick auf eine möglichst große Anzahl unterschiedlicher Getränke im Angebot Rechnung zu tragen, sind derartige Kaffeemaschinen mit Ausläufen für unterschiedliche Getränkeprodukte versehen. So findet sich neben dem eigentlichen Kaffeeauslauf noch ein Auslauf für Heißwasser für die Teezubereitung, ein Dampfauslauf zum Erhitzen oder zur Milcherschäumung und/oder ein integrierter Milchaufschäumer zur Zubereitung von z.B. Cappuccino. Die Mehrzahl der auf dem Markt befindlichen Kaffeemaschinen können unterschiedlich große Mengen eines bestimmten Getränkeprodukts herstellen. So ist es beispielsweise möglich, jeweils nur Tassenportionen oder Portionskännchen herzustellen und sofort auszugeben. Bei einigen Maschinen ist es weiterhin möglich größere Mengen zum Befüllen von Glas- oder Thermoskannen zuzubereiten und auszugeben. Ein Problem dabei ist es jedoch, dass die Gefäße unterschiedliche Höhen haben. Würde beispielsweise der Kaffeeauslauf in einer größtmöglichen Höhe angebracht, um eine hohe Thermoskanne unterstellen zu können, so könnte keine Tasse spritzerfrei und vollständig gefüllt werden. Bislang behilft man sich beispielsweise durch mehrere in unterschiedlichen Höhen angeordnete Ausläufe für ein und dasselbe Getränkeprodukt, beispielsweise Kaffee. Dies erfordert jedoch durch die zusätzlichen Ventile einen erhöhten konstruktiven und steuerungstechnischen Aufwand. Eine weitere bekannte Lösung ist, den Auslauf mit einem aufsteck- oder ausklappbaren Z-förmigen Verlängerungsrohr zu versehen, welches eigens zum Befüllen von Kannen aufgesteckt oder ausgeklappt werden muss. Es ist ebenfalls bereits bekannt, einen Auslauf höhenverstellbar direkt außen am Gehäuse vor oder unter der Frontblende platziert zu befestigen. Bei dieser Ausgestaltung ist der Verstellweg aber entweder durch die Frontblende selbst oder durch Bedienelemente auf der Frontblende begrenzt, so dass dieser Auslauf bisher nur einen Höhenunterschied zwischen einer Tasse und kleineren Kännchen oder Kannen ausgleichen konnte. Für die Befüllung von Glaskannen oder gar großen Thermoskannen musste nach wie vor ein weiterer, höher positionierter Auslauf vorgesehen sein.

Der Erfindung liegt somit die Aufgabe zugrunde, eine Kaffeemaschine bereitzustellen, bei der der Bereich einer Höhenverstellbarkeit eines Auslaufs auf konstruktiv einfache und sichere Weise vergrößert wird.

Die Aufgabe wird durch die im Anspruch 1 angegebenen Merkmale gelöst.

Durch die erfindungsgemäß vorgesehene, höhenverstellbare Frontblende und den unabhängig von der Frontblende höhenverstellbaren Auslauf kann auf konstruktiv einfache Weise ein wesentlich größerer Hohenverstellbereich für einen im Bereich der Frontblende angeordneten Auslauf realisiert werden; und man kann Funktionsteile wie z.B. Zuführschläuche hinter der Frontblende verschwinden lassen ohne das Erscheinungsbild der Bedienfläche zu stören.

Durch die Frontblende kann gemäß Anspruch 2 auch ein weiterer Auslauf zusammen mit der Frontblende höhenverstellt werden.

Anspruch 3 beschreibt eine besonders bevorzugte, konstruktiv einfache Möglichkeit der Höhenverstellbarkeit der Frontblende.

Die Ausgestaltung nach den Ansprüchen 4 und 5 erleichtert die Verstellung der Frontblende weiter.

Zweckmäßigerweise sind gemäß Anspruch 6 Anschläge vorgesehen, die die Frontblende in vorbestimmten Höhen anhalten.

Gemäß Anspruch 7 können diese vorbestimmten Höhen benutzerdefiniert verändert werden.

Es hat sich herausgestellt, dass es für die meisten Verwendungszwecke ausreicht, die Frontblende gemäß Anspruch 8 nur zwischen einer unteren und einer oberen Position verstellbar auszubilden, obwohl selbstverständlich sowohl eine stufenlose Höhenverstellbarkeit als auch eine Verstellung in mehreren Stufen möglich ist.

Zweckmäßigerweise wird die Frontblende in einer oberen Position gemäß Anspruch 9 durch die Gewichtsausgleichsvorrichtung und in einer unteren Position gemäß Anspruch 10 durch eine Rasteinrichtung gehalten, damit unbeabsichtigte und unerwünschte Stellungen der Frontblende verhindert werden, die gewünschte Höhenverstellung jedoch nicht beeinträchtigt wird.

Die Höhenverstellung des unabhängig von der Frontblende höhenverstellbaren Auslaufs geschieht gemäß Anspruch 11 zweckmäßigerweise manuell und über eine Führung sowie gemäß Anspruch 12 stufenlos.

Die Höhenverstellbarkeit über ein Reibungselement gemäß Anspruch 13 stellt einerseits sicher, dass der Auslauf in der eingestellten Höhe gehalten wird, erschwert jedoch die Höhenverstellung nicht unnötig. Sofern die Reibungskraft dieses Elements einstellbar ist, kann z.B. für Selbstbedienungssituationen der Auslauf auf einer fixen Höhe festgeklemmt werden.

Darüber hinaus kann gemäß Anspruch 14 die Führungsausnehmung eine Anschlagfunktion für den höhenverstellbaren Auslauf übernehmen, so dass dieser keine eigenen Anschläge benötigt.

Zweckmäßigerweise ist der höhenverstellbare Anschlag mit einer eigenen Abdeckblende versehen, die den Einblick oder unbeabsichtigten Zugriff durch die Führungsausnehmung zu den hinter der Frontblende angeordneten Bauteilen, wie beispielsweise die nachgeführten Zulaufschläuche erschwert.

Um die Höhenverstellung der Frontblende durch den Nutzer zu vereinfachen hat diese gemäß Anspruch 16 in einer unteren Position einen Abstand zum Gehäuse, so dass sie zum Hochschieben leichter ergriffen werden kann.

Zweckmäßigerweise wird dieser Abstand gemäß Anspruch 17 durch eine leichte Schrägstellung der Frontblende erreicht. Auch die Maßnahme nach Anspruch 18 erleichtert das Höhenverstellen der Frontblende.

Anspruch 19 beschreibt ein besonders bevorzugte Ausführungsbeispiel der erfindungsgemäßen Kaffeemaschine.

Ein bevorzugtes Ausführungsbeispiel der erfindungsgemäßen Kaffeemaschine wird nachfolgend anhand der Zeichnungen näher erläutert. Es zeigen:
- Fig. 1: eine schematische, perspektivische Darstellung einer erfindungsgemäß ausgerüsteten Kaffeemaschine,
- Fig. 2: eine schematische Darstellung des Konstruktionsprinzips mit der höhenverstellbaren Frontblende in einer unteren Position,
- Fig. 3: eine Darstellung ähnlich Fig. 2 mit der höhenverstellbaren Frontblende in einer oberen Position,
- Fig. 4: eine schematische Darstellung des Konstruktionsprinzips eines unabhängig höhenverstellbaren Auslaufs in einer unteren Position, und
- Fig. 5: eine Darstellung ähnlich Fig. 4 mit dem höhenverstellbaren Auslauf und der Frontblende in einer oberen Position.

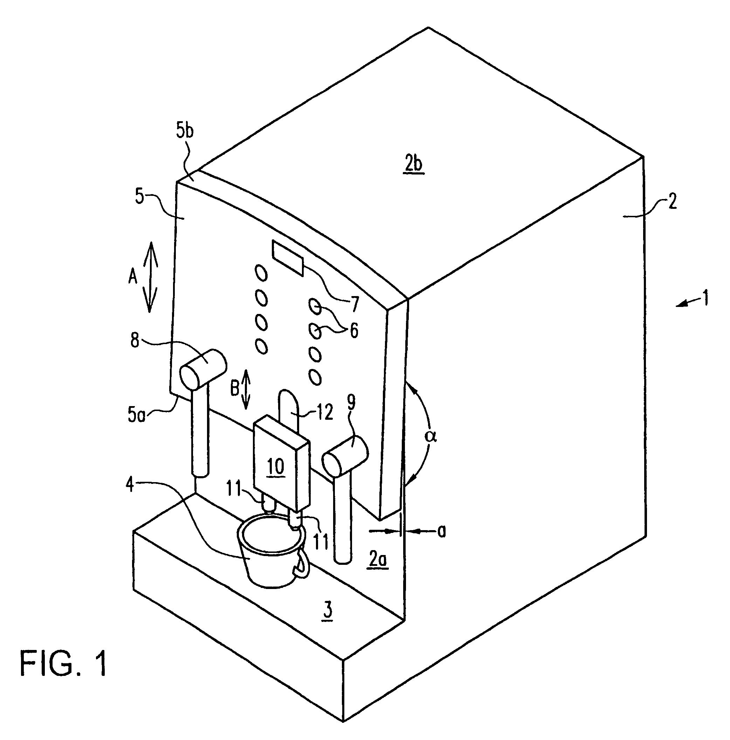

Fig. 1 zeigt in schematischer Darstellung eine Kaffeemaschine 1 mit den für die Erfindung wesentlichen Merkmalen. Die Kaffeemaschine 1 weist ein Gehäuse 2 auf, das an der dem Benutzer zugewandten Seite mit einer Stellfläche 3 versehen ist, auf die Benutzergefäße 4 unterschiedlichster Art, dargestellt eine Tasse, zum Befüllen gestellt werden können. Die Stellfläche 3 ist an der dem Benutzer abgewandte Seite durch eine Begrenzungswand 2a des Gehäuses 2 abgeschlossen, die sich im Wesentlichen senkrecht zur Stellfläche 3 erstreckt und, wie im dargestellten Ausführungsbeispiel, bogenförmige gewölbt oder gerade sein kann. Oberhalb der Wand 2a ist das Gehäuse 2 durch eine Frontblende 5 abgedeckt, die ebenfalls gekrümmt oder gerade sein kann. Die Frontblende 5 ist in nachfolgend beschriebener Weise in Richtung des Pfeils A höhenverstellbar ausgebildet. Fig. 1 zeigt die Frontblende 5 in ihrer untersten Position, in der eine Unterkante 5a der Frontblende 5 im Abstand oberhalb der Stellfläche 3 endet und die Wand 2a im oberen Bereich überdeckt. Eine Oberkante 5b deckt die Vorderkante der Oberseite 2b des Gehäuses 2 ab.

Die Frontblende 5 ist um einen Winkel α geringfügig gegenüber der Horizontalen und der vertikal verlaufenden Wand 2a nach hinten geneigt, so dass die Unterkante 5a der Frontblende 5 in ihrer untersten Position einen horizontalen Abstand a, beispielsweise 0,5 bis 2 cm, von der Wand 2a aufweist.

Die Frontblende 5 ist mit einer Steuerung, den üblichen Bedienelementen 6 und den üblichen Anzeigefeldern 7 versehen, die über flexible, einen Bewegungsspielraum gestattenden Leitungen mit der Elektrik/Elektronik im Inneren des Gehäuses 2 verbunden sind.

Im dargestellten Ausführungsbeispiels sind weiterhin zwei Ausläufe 8 und 9 fest mit der Frontblende 5 verbunden, so dass sie zusammen mit der Frontblende 5 in Richtung des Doppelpfeils A höhenverstellbar sind. Die Ausläufe 8 und 9 können beispielsweise zum Ausgeben von Dampf und/oder Heißwasser genutzt werden. Die Ausläufe 8 und 9 sind hinter der Frontblende 5 über flexible, eine Überlänge aufweisende Zuführschläuche mit den entsprechenden Heißwasser- oder Dampfbereitern verbunden.

Die Kaffeemaschine 1 ist weiterhin mit einem dritten Auslauf 10 versehen, der unabhängig von der Frontblende 5 entlang des Doppelpfeils B höhenverstellbar ist. Der dritte Auslauf 10 ist als üblicher Doppelauslauf mit zwei Auslaufröhrchen 11 ausgebildet und dient zum Ausgeben z.B. von Kaffeegetränken. Der Auslauf 10 ist hinter der Frontblende 5 und der Wand 2a über wenigstens einen flexiblen, eine Überlänge aufweisenden Schlauch mit der zugeordneten Brüheinrichtung verbunden. Im Bereich des Auslaufes 10 ist die Frontplatte 5 mit einer schlitzartigen, an der Unterkante 5a offenen Führungsausnehmung 12 versehen.

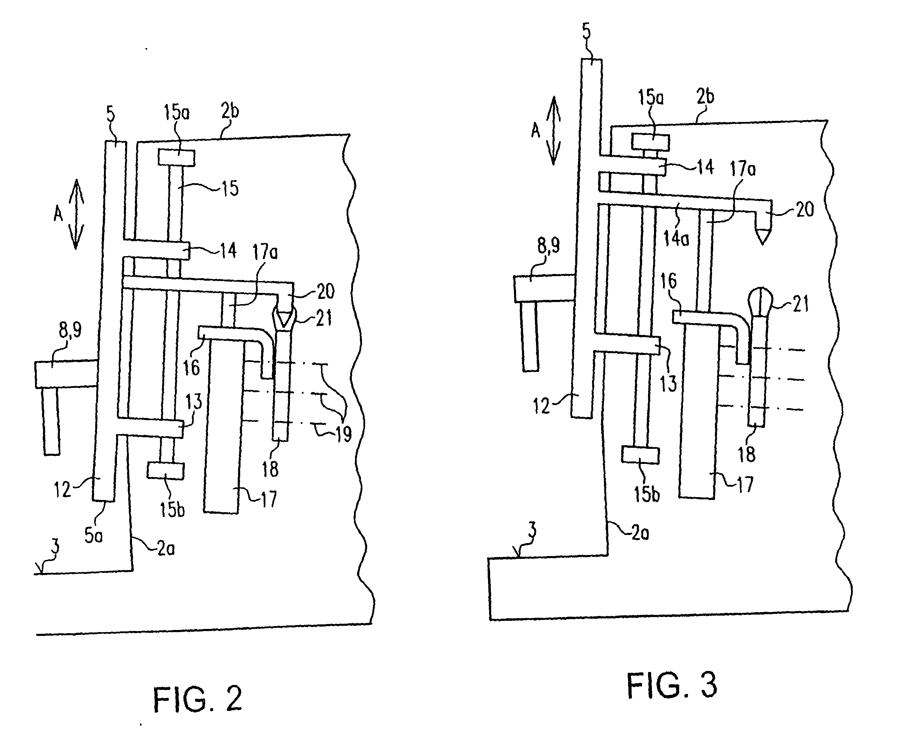

Nachfolgend wird anhand der Fig 2 und 3 die Höhenverstellung der Frontblende 5 beschrieben.

Die Frontblende 5 ist über eine untere Führungslasche 13 und eine obere Führungslasche 14 an einem Führungsstab 15 gleitend befestigt. Zweckmäßigerweise erstreckt sich der Führungsstab 15 durch mit Gleitbuchsen ausgekleideten Öffnung in den Laschen 13 und 14. Die Führungsstange 15 erstreckt sich in Richtung des Pfeils A. Der Führungsstab 15 ist über eine obere und eine untere Befestigung 15a und 15b am Gehäuse 2 befestigt, wobei die obere Befestigung 15a als Anschlag für die obere Lasche 14 dient.

In der Nähe der Führungsstange 15 ist eine Montageplatte 16 fest im Gehäuse 2 angeordnet. Die Montageplatte 16 befestigt eine Gewichtsausgleichsvorrichtung in Form einer Gasfeder 17. An der Montageplatte 16 ist weiterhin eine Halteplatte 18 befestigt, die in Richtung des Pfeils A verstellbar ist; und zwar beispielsweise durch eine Reihe gestaffelt angeordneter Schraublöcher 19 und zugeordneter Schraubverbindungen.

Eine an der Frontblende 5 befestigte, weitere Montageplatte 14a erstreckt sich über die Gasfeder 17 hinweg und weist an ihrem freien Ende einen Raststift 20 auf, der mit einer Rastaufnahme 21 in Rasteingriff treten kann, die an der Halteplatte 19 befestigt ist. Die Kolbenstange 17a der Gasfeder 17 schlägt unten an diese Montageplatte 14a an.

Fig. 2 zeigt die auch in Fig. 1 dargestellt, untere Position der Frontblende 5, die beispielsweise eingenommen wird, wenn Kaffee in Tassen ausgegeben wird. In dieser unteren Stellung ist der Raststift 20 in der Rastaufnehmung 21 aufgenommen, wobei die Rastverbindung so stark ist, dass es der Gasfeder 17 allein nicht gelingt, die Frontblende 5 nach oben zu schieben.

Soll beispielsweise mit der erfindungsgemäßen Kaffeemaschine 1 Kaffee oder Heißwasser überwiegend statt in Tassen beispielsweise in hohe Becher ausgegeben werden, so kann die untere Position der Frontblende 5 nach oben verschoben werden, indem die Halteplatte 18 um eines oder mehrere Löcher 19 nach oben verschoben wird, so dass die Rastverbindung 20, 21, die die untere Position definiert, nach oben verlagert wird.

Sollen mit der erfindungsgemäßen Kaffeemaschine 1 höhere Gefäße, wie beispielsweise die üblichen Glaskannen oder noch höhere Thermoskannen befüllt werden, so wird die Frontblende 5 aus der in der Fig. 2 gezeigten Stellung in die in Fig. 3 gezeigte, obere Position verschoben. Zu diesem Zweck ergreift ein Benutzer die Unterkante 5a der Frontblende 5, was durch den Abstand a zur Wand 2a erleichtert wird, und schiebt die Frontblende nach oben. Dabei muss zunächst eine geringfügige Kraft aufgewandt werden, um den Raststift 20 aus der Rastaufnahme 21 zu lösen. Anschließend übemimmt die Gasfeder 17 mehr oder weniger allein das Hochfahren der Blende 5. Die obere Position der Frontblende 5 ist erreicht, wenn die obere Führungslasche 14 an der oberen Befestigung 15a der Stange 15 anschlägt. In dieser Stellung verhindert die Gasfeder 17, dass die Frontblende 5 unter ihrem eigenen Gewicht zurückgleitet.

Auf diese Weise können die fest mit der Frontblende 5 verbundenen Ausläufe 8 und 9 zwischen einer unteren und einer oberen Position verschoben werden.

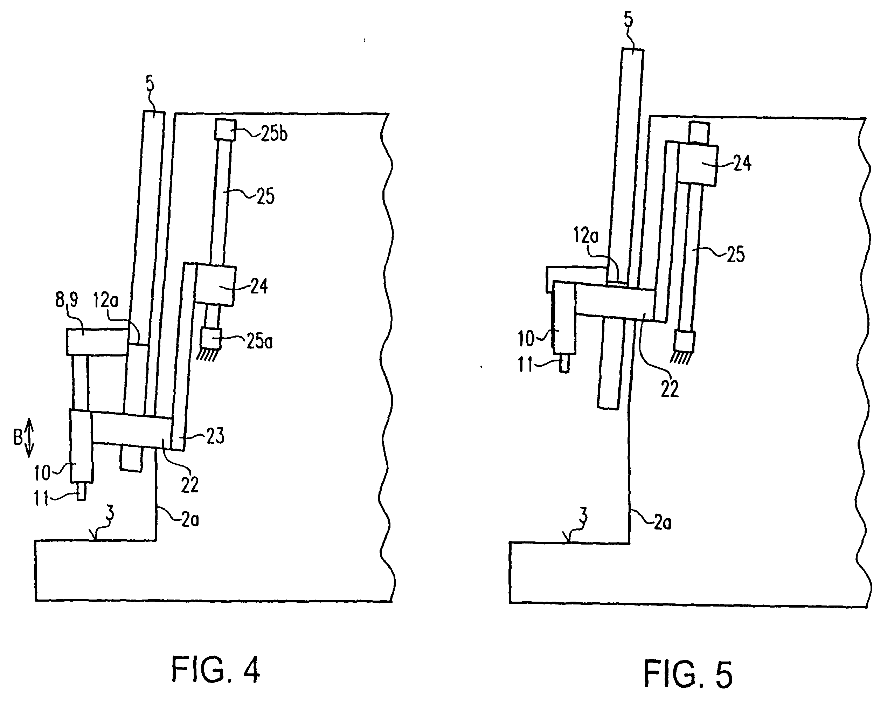

Die Feineinstellung der Höhenverstellung des Kaffeeauslaufs 10 wird durch die in den Fig. 4 und 5 gezeigten Merkmale ermöglicht. Ebenso wie in den Fig. 2 und 3 die Verstellmöglichkeit des Auslaufs 10 weggelassen wurde, ist in den Fig. 4 und 5 aus Gründen der Ubersichtlichkeit die Verstelleinrichtung für die Frontplatte 5 weggelassen.

Der Auslauf 10 ist über einen Abstandsträger 22, der sich durch die Führungsausnehmung 12 erstreckt, mit dem unteren Ende einer Abdeckblende 23 verbunden, die in Form und Größe der Form und Größe der schlitzartigen Führungsaufnahme 12 angepasst ist, so dass der Blick und der Zugriff in das Innere des Gehäuses 2 durch die oberhalb des Auslasses 10 offene Führungsaufnahme 12 versperrt ist. Am oberen Ende der Abdeckblende 23 ist ein Führungsklotz 24 befestigt, mit dem der Auslauf 10 an einer gehäusefesten Führungsstange 25 in Richtung des Pfeils B stufenlos verschiebbar ist. An der Führungsstange 25 sind Endanschläge 25a und 25b vorgesehen, die das Abrutschen des Führungsklotzes 24 von der Führungsstange 25 verhindern.

Der Führungsklotz 24 sitzt reibungsgebremst auf der Führungsstange 25, so dass er sich zwar manuell entlang der Führungsstange 25 gleitend verschieben lässt, die Verschiebungsposition dann jedoch auch unter Wirkung des Gewichtes des Auslaufs beibehält. Die Reibungskraft des Klotzes 24 kann, z.B. durch eine Einstellschraube (nicht gezeigt) einstellbar sein, so dass der Auslauf 10 in einer bevorzugten Höhe festgelegt werden kann.

Der Auslauf 10 kann prinzipiell über die gesamte Länge der Führungsstange 25 stufenlos höhenverstellt werden, sein Verstellweg wird jedoch durch die Führungsaufnahme 12 begrenzt. Wie insbesondere Fig. 5 zeigt, wirkt das obere Ende der Führungsaufnahme 12 als oberer Anschlag 12a für den Träger 22 des Auslaufs 10.

Der Auslauf 10 kann somit in der in Fig. 4 gezeigt, unteren Position der höhenverstellbaren Frontblende 5 relativ zur Frontblende 5 bis zum Anschlag des Trägers 22 am Anschlag 12a höhenverstellt werden. Die Höhe des Anschlags 12a über der Stellfläche 3 sollte konstruktionsbedingt und durch Wahl des geeigneten Befestigungsloches 19 der Halteplatte 18, so gewählt werden, dass in der in Fig. 4 gezeigten, unteren Position der Frontplatte 5 niedrigere Gefäße, wie beispielsweise Espressotassen bei der untersten Stellung des Auslaufs 10, normale Tassen bei einer etwas nach oben verschoben Stellung des Auslaufs 10 oder Portionskännchen bei einer höheren Stellung des Auslaufs 10, beispielsweise bei Anschlag des Trägers 22 am Anschlag 12a, befüllt werden können.

Sollen höhere Gefäße befüllt werden, wie beispielsweise Glaskannen oder noch höhere Thermoskannen, dann wird die Frontblende 5 in der bereits beschnebenen Weise in ihre in Fig. 5 gezeigte obere Position verschoben, wodurch auch die Verstellmöglichkeit des Auslaufs 10 nach oben erweitert wird, wobei die maximale Höhe des Auslaufs 10 über der Stellfläche 3 dann erreicht ist, wenn der Träger 22 in der höchsten Stellung der Frontplatte 5 am oberen Anschlag 12a der Führungsaufnahme 12 anschlägt.

In Abwandlung des beschriebenen und gezeichneten Ausführungsbeispiels kann auch der Kaffeeauslauf mit seiner Höhenverstelleinrichtung an der Frontplatte befestigt werden, so dass sich die beiden Höhenverstellwege von Auslauf und Frontplatte addieren. Auf diese Weise ist ein noch größerer Bereich einer Höhenverstellbarkeit möglich. Die Höhenverstelleinrichtung sowohl für die Frontplatte als auch für den Kaffeeauslauf können die unterschiedlichsten konstruktiven Ausgestaltungen annehmen; sie können beispielsweise als Schienenführung, als stufenweise arbeitende Einrichtungen, wie z.B. Rastführungen, oder dergleichen ausgebildet sein. Bei einer zweckmäßigen Abstimmung des Gewichts der Frontplatte und der Wirkung der Gasfeder kann auch die Frontplatte zwischen den oberen und unteren Anschlägen in weiteren Stellungen gestuft oder stufenlos verstellbar sein, wobei diese Abstimmung sicherstellt, dass die Frontplatte in der gewählten Stufenhöhe durch die Gasfeder sicher gehalten wird. Anstelle einer manuellen Verschiebung kann eine Verstellung über einen geeigneten Antrieb vorgesehen werden. Die Schrägstellung der Frontblende ist nicht unbedingt notwendig; es kann beispielsweise auch durch einen Handgriff dafür gesorgt werden, dass die Frontblende bedienungsfreundlich verschoben werden kann. Auch ist es nicht notwendig, dass die gesamte vordere Abdeckung als höhenverstellbare Frontblende ausgebildet ist, es reicht vielmehr wenn nur derjenige Bereich der vorderen Wandung des Gehäuses höhenverstellbar ist, der den zu verstellenden Ausläufen zugeordnet ist.

## Patentansprüche

1. Kaffeemaschine (1) mit einem Gehäuse (2), wenigstens einem höhenverstellbaren Auslauf (10) für ein Getränkeprodukt und einer höhenverstellbaren Frontblende (5), wobei die Frontblende (5) Bedienelemente (6, 7), eine Führungsausnehmung (12) für den verstellbaren Auslauf (10) und einen Anschlag (12a) für die Höhenverstellbarkeit des Auslaufs (10) enthält und der Auslauf (10) unabhängig von der Frontblende (5) höhenverstellbar ist.

2. Kaffeemaschine nach Anspruch 1, **dadurch gekennzeichnet, dass** wenigstens ein weiterer Auslauf (8, 9) vorgesehen ist, der zusammen mit der Frontblende (5) höhenverstellbar ist.

3. Kaffeemaschine nach Anspruch 1 oder 2, **dadurch gekennzeichnet, dass** die Frontblende (5) über eine Führung (15), bevorzugt eine Gleitführung, manuell verschiebbar ist.

4. Kaffeemaschine nach einem der Ansprüche 1 bis 3, **dadurch gekennzeichnet, dass** die Frontblende (5) gegen die Wirkung einer Gewichtsausgleichsvorrichtung (17) höhenverstellbar ist.

5. Kaffeemaschine nach Anspruch 4, **dadurch gekennzeichnet, dass** die Gewichtsausgleichsvorrichtung eine Gasfeder (17) ist.

6. Kaffeemaschine nach einem der Ansprüche 1 bis 5, **dadurch gekennzeichnet, dass** die Frontblende (5) zwischen Anschlägen (14, 15a, 20, 21) verstellbar ist.

7. Kaffeemaschine nach Anspruch 6, **dadurch gekennzeichnet, dass** wenigstens einer der Anschläge (20, 21) verstellbar ist.

8. Kaffeemaschine nach Anspruch 6 oder 7, **dadurch gekennzeichnet, dass** die Frontblende (5) zwischen einem Anschlag (14, 15a) für eine obere Position und einem Anschlag (20, 21) für eine untere Position verstellbar ist.

9. Kaffeemaschine nach Anspruch 4 und 8, **dadurch gekennzeichnet, dass** die Frontblende (5) in ihrer oberen Position durch die die Frontblende (5) gegen einen Anschlag (15a) drückende Gewichtsausgleichsvorrichtung (17) gehalten ist.

10. Kaffeemaschine nach Anspruch 8 oder 9, **dadurch gekennzeichnet, dass** die Frontblende (5) in der unteren Position durch eine Rasteinrichtung (20, 21) gehalten ist.

11. Kaffeemaschine nach einem der Ansprüche 1 bis 10, **dadurch gekennzeichnet, dass** der unabhängig von der Frontblende (5) höhenverstellbarer Auslauf (10) über eine Führung (25), bevorzugt eine Gleitführung, manuell höhenverstellbar ist.

12. Kaffeemaschine nach Anspruch 11, **dadurch gekennzeichnet, dass** der Auslauf (10) stufenlos höhenverstellbar ist.

13. Kaffeemaschine nach Anspruch 11 oder 12, **dadurch gekennzeichnet, dass** der Auslauf (10) reibungsgebremst, bevorzugt mit einstellbarer Reibungskraft, höhenverstellbar ist.

14. Kaffeemaschine nach einem der Ansprüche 1 bis 13, **dadurch gekennzeichnet, dass** die Führungsausnehmung (12) den Anschlag (12a) für die Höhenverstellbarkeit des verstellbaren Auslaufs (10) enthält.

15. Kaffeemaschine einem der Ansprüche 1 bis 14, **dadurch gekennzeichnet, dass** der höhenverstellbare Anschlag (10) mit einer Abdeckblende (23) zum Abdecken der Führungsausnehmung (12) verbunden ist.

16. Kaffeemaschine nach einem der Ansprüche 1 bis 15, **dadurch gekennzeichnet, dass** eine Unterkante (5a) der Frontblende (5) in einer unteren Position einen ho-rizontalen Abstand (a) zum Gehäuse (2) aufweist.

17. Kaffeemaschine nach Anspruch 16, **dadurch gekennzeichnet, dass** die Frontblende (5) auf einem unter einem Winkel (α) zur Horizontalen vom Benutzer weg geneigten Weg (A) höhenverstellbar ist.

18. Kaffeemaschine nach einem der Ansprüche 1 bis 17, **dadurch gekennzeichnet, dass** die Frontblende (5) in einer oberen Position über das Gehäuse (2) hinausragt.

19. Kaffeemaschine nach einem der Ansprüche 1 bis 18, **gekennzeichnet durch** wenigstens einen mit der höhenverstellbaren Frontblende (5) fest verbundenen Auslauf (8, 9), und einen unabhängig von und relativ zur Frontblende (5) höhenverstellbaren Auslauf (10) für Kaffeegetränk, wobei die Frontblende (5) mit Bedienelementen (6, 7) versehen ist und eine Führungsausnehmung (12) aufweist, die mit einem Anschlag (12a) zur Begrenzung der Höhenverstellbarkeit des verstellbaren Auslaufs (10) versehen ist.

## Claims

1. Coffee machine (1) having a housing (2), at least one height-adjustable outlet (10) for a beverage product and a height-adjustable front panel (5), wherein the front panel (5) comprises operating elements (6, 7), a guide recess (12) for the adjustable outlet (10) and a limit stop (12a) for the height-adjustability of the outlet (10) and the outlet (10) is height-adjustable independently of the front panel (5).

2. Coffee machine according to claim 1, **characterised in that** at least one other outlet (8, 9) is provided which is height-adjustable together with the front panel (5).

3. Coffee machine according to claim 1 or 2, **characterised in that** the front panel (5) is manually movable via a guide (15), pref erably a slide guide.

4. Coffee machine according to one of claims 1 to 3, **characterised in that** the front panel (5) is height-adjustable against the action of a weight-balancing device (17).

5. Coffee machine according to claim 4, **characterised in that** the weight-balancing device is a pneumatic spring (17).

6. Coffee machine according to one of claims 1 to 5, **characterised in that** the front panel (5) is adjustable between limit stops (14, 15a, 20, 21).

7. Coffee machine according to claim 6, **characterised in that** at least one of the limit stops (20, 21) is adjustable.

8. Coffee machine according to claim 6 or 7, **characterised in that** the front panel (5) is adjustable between a limit stop (14, 15a) for an upper position and a limit stop (20, 21) for a lower position.

9. Coffee machine according to claims 4 and 8, **characterised in that** the front panel (5) is held in its upper position by the weight-balancing device (17) pressing the front panel (5) against a limit stop (15a).

10. Coffee machine according to claim 8 or 9, **characterised in that** the front panel (5) is held in the lower position by a catch device (20, 21).

11. Coffee machine according to one of claims 1 to 10, **characterised in that** the outlet (10) which is height-adjustable independently of the front panel (5) is manually height-adjustable via a guide (25), preferably a slide guide.

12. Coffee machine according to claim 11, **characterised in that** the outlet (10) is continuously height-adjustable.

13. Coffee machine according to claim 11 or 12, **characterised in that** the outlet (10) is height-adjustable in friction-braked manner, preferably by means of adjustable friction force.

14. Coffee machine according to one of claims 1 to 13, **characterised in that** the guide recess (12) contains the limit stop (12a) for the height-adjustability of the adjustable outlet (10).

15. Coffee machine according to one of claims 1 to 14, **characterised in that** the height-adjustable limit stop (10) is connected to a covering shield (23) for covering the guide recess (12).

16. Coffee machine according to one of claims 1 to 15, **characterised in that** in a lower position a lower edge (5a) of the front panel (5) exhibits a horizontal spacing (a) relative to the housing (2).

17. Coffee machine according to claim 16, **characterised in that** the front panel (5) is height-adjustable on a pathway (A) inclined away from the user at an angle (α) to the horizontal.

18. Coffee machine according to one of claims 1 to 17, **characterised in that** in an upper position the front panel (5) projects beyond the housing (2).

19. Coffee machine according to one of claims 1 to 18, **characterised by** at least one outlet (8, 9) fixedly connected to the height-adjustable front panel (5) and an outlet (10) for coffee beverage which is height-adjustable independently of and relative to the front panel (5), wherein the front panel (5) is provided with operating elements (6, 7) and has a guide recess (12) which is provided with a limit stop (12a) for limiting the height-adjustability of the adjustable outlet (10).

## Revendications

1. Machine à café (1) comportant un boîtier (2), au moins un écoulement de sortie (10) réglable en hauteur pour une boisson, et un panneau frontal (5) réglable en hauteur, le panneau frontal (5) comprenant des éléments de commande (6, 7), un évidement de guidage (12) pour l'écoulement de sortie (10) réglable et une butée (12a) pour le réglage en hauteur de l'écoulement de sortie (10), et l'écoulement de sortie (10) étant réglable en hauteur indépendamment du panneau frontal (5).

2. Machine à café selon la revendication 1, **caractérisée en ce qu'**il est prévu au moins un autre écoulement de sortie (8, 9) qui est réglable en hauteur avec le panneau frontal (5).

3. Machine à café selon la revendication 1 ou 2, **caractérisée en ce que** le panneau frontal (5) peut être déplacé manuellement par l'intermédiaire d'un guidage (15), de préférence d'un guidage coulissant.

4. Machine à café selon l'une quelconque des revendications 1 à 3, **caractérisée en ce que** le panneau frontal (5) est réglable en hauteur en s'opposant à l'effet d'un dispositif d'équilibrage de poids (17).

5. Machine à café selon la revendication 4, **caractérisée en ce que** le dispositif d'équilibrage de poids est un ressort pneumatique (17).

6. Machine à café selon l'une quelconque des revendications 1 à 5, **caractérisée en ce que** le panneau frontal (5) est réglable entre des butées (14, 15a, 20, 21).

7. Machine à café selon la revendication 6, **caractérisée en ce que** l'une au moins des butées (20, 21) est réglable.

8. Machine à café selon la revendication 6 ou 7, **caractérisée en ce que** le panneau frontal (5) peut être déplacé entre une butée (14, 15a) pour une position supérieure, et une butée (20, 21) pour une position inférieure.

9. Machine à café selon les revendications 4 et 8, **caractérisée en ce que**, dans sa position supérieure, le panneau frontal (5) est retenu par le dispositif d'équilibrage de poids (17) qui applique le panneau frontal (5) contre une butée (15a).

10. Machine à café selon la revendication 8 ou 9, **caractérisée en ce que**, dans la position inférieure, le panneau frontal (5) est retenu par un dispositif d'encliquetage (20, 21).

11. Machine à café selon l'une quelconque des revendications 1 à 10, **caractérisée en ce que** l'écoulement de sortie (10) réglable en hauteur indépendamment du panneau frontal (5) peut être réglé en hauteur manuellement par l'intermédiaire d'un guidage (25), de préférence d'un guidage coulissant.

12. Machine à café selon la revendication 11, **caractérisée en ce que** l'écoulement de sortie (10) est réglable en hauteur en continu.

13. Machine à café selon la revendication 11 ou 12, **caractérisée en ce que** l'écoulement de sortie (10) est réglable en hauteur en étant freiné par friction, de préférence par une force de friction réglable.

14. Machine à café selon l'une quelconque des revendications 1 à 13, **caractérisée en ce que** l'évidement de guidage (12) comporte la butée (12a) pour la possibilité de réglage en hauteur de l'écoulement de sortie (10) réglable.

15. Machine à café selon l'une quelconque des revendications 1 à 14, **caractérisée en ce que** la butée (10) réglable en hauteur est reliée à un panneau de recouvrement (23) destiné au recouvrement de l'évidement de guidage (12).

16. Machine à café selon l'une quelconque des revendications 1 à 15, **caractérisée en ce que**, dans une position inférieure, un bord inférieur (5a) du panneau frontal (5) est situé à un écartement horizontal (a) du boîtier (2).

17. Machine à café selon la revendication 16, **caractérisée en ce que** le panneau frontal (5) est réglable en hauteur sur une voie inclinée (A) qui s'écarte de l'utilisateur suivant un angle (α) par rapport à l'horizontale.

18. Machine à café selon l'une quelconque des revendications 1 à 17, **caractérisée en ce que**, dans une position supérieure, le panneau frontal (5) dépasse du boîtier (2).

19. Machine à café selon l'une quelconque des revendications 1 à 18, **caractérisée par** au moins un écoulement de sortie (8, 9) relié solidairement au panneau frontal (5) réglable en hauteur, et par un écoulement de sortie (10) pour des boissons à base de café, pouvant être réglé en hauteur indépendamment du panneau frontal (5) et par rapport à celui-ci, le panneau frontal (5) étant doté d'éléments de commande (6, 7), et comportant un évidement de guidage (12) qui est muni d'une butée (12a) pour limiter la possibilité de réglage en hauteur de l'écoulement de sortie (10) réglable.
